Europäisches Patentamt

European Patent Office

Office européen des brevets

(19)

(11) **EP 0 855 079 B1**

(12) **FASCICULE DE BREVET EUROPEEN**

(45) Date de publication et mention
de la délivrance du brevet:
**07.06.2000 Bulletin 2000/23**

(21) Numéro de dépôt: **96929350.5**

(22) Date de dépôt: **20.08.1996**

(51) Int Cl.⁷: $G10K\ 11/34$, G01S 15/89

(86) Numéro de dépôt international:
**PCT/FR96/01298**

(87) Numéro de publication internationale:
**WO 97/11452 (27.03.1997 Gazette 1997/14)**

(54) **PROCEDE D'AUTOFOCALISATION POUR SONAR A ANTENNE SYNTHETIQUE**

SELBSTFOKUSSIERENDES VERFAHREN FÜR SYNTHETISCHE SONARANTENNE

SELF-FOCUSING METHOD FOR SYNTHETIC ANTENNA SONARS

(84) Etats contractants désignés:
**DE DK GB**

(30) Priorité: **19.09.1995 FR 9510953**

(43) Date de publication de la demande:
**29.07.1998 Bulletin 1998/31**

(73) Titulaire: **THOMSON-CSF**
**75008 Paris (FR)**

(72) Inventeur: **BILLON, Didier Thomson-CSF SCPI**
**F-94117 Arcueil Cédex (FR)**

(74) Mandataire: **Desperrier, Jean-Louis**
**Thomson-CSF Propriété Intellectuelle,**
**13, Avenue du Président Salvador Allende**
**94117 Arcueil Cédex (FR)**

(56) Documents cités:
DE-A- 3 413 074     US-A- 4 953 143
US-A- 5 295 118

• **PATENT ABSTRACTS OF JAPAN vol. 016, no. 386 (P-1404), 18 Août 1992 & JP,A,04 125487 (HITACHI LTD), 24 Avril 1992,**
• **PROCEEDINGS OF THE SYMPOSIUM ON AUTONOMOUS UNDERWATER VEHICLE TECHNOLOGY, WASHINGTON, JUNE 2 - 3, 1992, no. -, 2 Juin 1992, INSTITUTE OF ELECTRICAL AND ELECTRONICS ENGINEERS, pages 236-245, XP000344382 SHERIFF R W: "SYNTHETIC APERTURE BEAMFORMING WITH AUTOMATIC PHASE COMPENSATION FOR HIGII FREQUENCY SONARS" cité dans la demande**
• **IMAGE AND MULTIDIMENSIONAL SIGNAL PROCESSING, MINNEAPOLIS, APR. 27 - 30, 1993, vol. 5 OF 5, 27 Avril 1993, INSTITUTE OF ELECTRICAL AND ELECTRONICS ENGINEERS, pages 445-448, XP000437705 DOUGLAS B L ET AL: "SYNTHETIC-APERTURE SONAR IMAGING WITH A MULTIPLE-ELEMENT RECEIVER ARRAY"**

## Description

La présente invention se rapporte aux sonars à antenne synthétique dans lesquels l'antenne physique est formée par un réseau linéaire de transducteurs. Tous les transducteurs sont actifs en réception alors que seule une partie d'entre eux est utilisée à l'émission.

Pour former les voies d'une telle antenne synthétique, on combine linéairement les KxN signaux délivrés par les N transducteurs lors de K récurrences successives. Pour ce faire, il faut connaître la géométrie de l'antenne synthétique, c'est-à-dire la position des centres de phase des transducteurs en émission et en réception, pendant la durée des K récurrences dans un plan Oxy où Ox est l'axe de visée vers le fond (dont l'inclinaison en site varie dans la récurrence comme le site du fond) et Oy est l'axe perpendiculaire à Ox le plus proche de la trajectoire moyenne de la plate-forme. Les écarts de l'antenne synthétique par rapport au plan Oxy sont suffisamment faibles pour être négligés dans la plupart des cas pratiques.

On dispose aussi de moyens suffisamment précis de mesure du déplacement du support des transducteurs suivant Oy, direction pour laquelle on a besoin d'une précision moindre que pour Ox. Ainsi le problème de la connaissance de la géométrie de l'antenne synthétique dans le plan Oxy se ramène à celui de la connaissance de sa géométrie suivant l'axe de visée Ox.

Pour résoudre ce problème la société Westinghouse a proposé d'appliquer le principe des centres de phase équivalents dans "Synthetic aperture beamforming with automatic phase compensation for high frequency sonars", R.W. Sheriff, AUV 92 [1]. Pour cela, on détermine l'écart entre la somme des abscisses $x_k$ du centre de phase de l'émission à la récurrence k et $x_{n,k}$ du centre de phase du capteur de réception n à la récurrence k, et la somme des abscisses $x_{k+1}$ du centre de phase de l'émission à la récurrence k+1 et du capteur de réception n' à la récurrence k+1 en mesurant le retard d'intercorrélation des deux signaux des capteurs (n,k) et (n',k+1) choisis tels que l'on ait :

$$Y_k + Y_{n,k} = Y_{k+1} + Y_{n',k+1} \qquad (1)$$

qui est la condition d'équivalence des centres de phase correspondant à une corrélation maximale des signaux reçus sur le capteur n à la récurrence k et le capteur n' à la récurrence k+1.

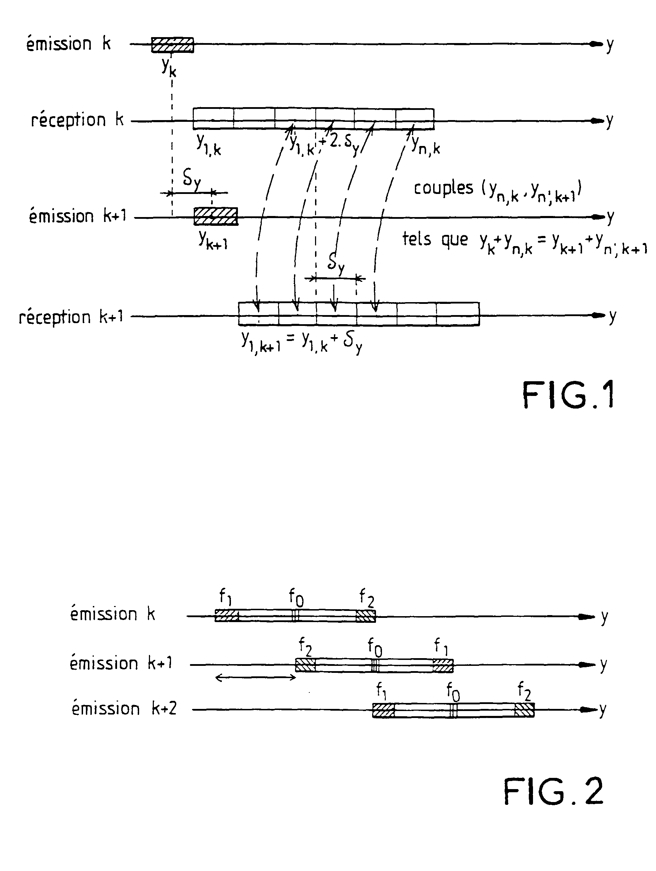

Dans le document [1] on considère un réseau de deux transducteurs, dont le premier est utilisé en émission et en réception, et le second en réception uniquement. Le déplacement suivant Oy entre deux récurrences successives étant égal à la moitié de la distance entre les deux capteurs, la relation (1) est assurée par n = 2 et n' = 1. Comme représenté sur la figure 1 on peut généraliser ceci à un réseau de N capteurs et à un déplacement $\delta y$ inférieur à la demi-longueur du réseau pour tout $y_{n,k}$ tel que

$$Y_{n,k} - 2.\delta y \geq Y_{1,k} \qquad (2)$$

On peut déterminer par interpolation spatiale sur les signaux de la récurrence k+1 un signal de capteur correspondant à une position $y_{n',k+1}$ de son centre de phase sur Oy tel que l'on ait (1) (puisque $y_{k+1} = y_k + \delta_y$ et $y_{n',k+1} = y_{n',k} + \delta y$, (1) équivaut à $y_{n,k} = y_{n',k} + 2.\delta y$), et ensuite estimer le retard d'intercorrélation entre le capteur interpolé (n',k+1) et le capteur (n,k), que l'on notera $\tau_{n',n,k}$. L'interpolation spatiale conduit à considérer des indices n' fractionnaires. On a $\tau_{n',n,k} = \tau_{n',n,k,x} + \tau_{n',n,k,y}$ où $\tau_{n',n,k,x}$ dépend des abscisses $x_k$, $x_{k+1}$, $x_{n,k}$, $x_{n',k+1}$ que l'on veut estimer, et $\tau_{n'n,k,y}$ dépend des ordonnées $y_k$, $y_{k+1}$, $y_{n,k}$ et $y_{n',k+1}$. Les ordonnées étant connues, $\tau_{n',n,k,y}$ est connu. De la mesure de $\tau_{n',n,k}$ on déduit la mesure de $\tau_{n',n,k,x} = \tau_{n',n,k} - \tau_{n',n,k,y}$.

On obtient alors un ensemble de couples de centres de phase émission-réception ((n,k), (n',k+1)), dont une estimation de l'écart des abscisses est donnée par :

$$(X_{k+1} + X_{n',k+1}) - (X_k + X_{n,k}) = - C.\tau_{n',n,k,x} \qquad (3)$$

Les ordonnées des centres de phase d'émission $y_k$ et $y_{k+1}$, et de réception $y_{n,k}$ et $y_{n',k+1}$ sont fournies par la mesure du déplacement suivant Oy obtenu par les moyens de mesure cités plus haut.

On peut donc estimer la forme de l'antenne synthétique de proche en proche (de récurrence à récurrence), ce qui amène à considérer que $x_k + x_{n,k}$ est connu, (3) donnant alors $x_{k+1} + x_{n',k+1}$. Le réseau étant linéaire, il suffit de connaître $x_{k+1} + x_{n',k+1}$ pour au moins deux valeurs de n' pour calculer par régression linéaire les abscisses $x_{k+1} + x_{n,k+1}$ des N centres de phase émission-réception réels (c'est-à-dire non interpolés spatialement, n entier) de la récurrence k + 1. On peut aussi éventuellement prendre en compte dans l'estimation des $x_{k+1} + x_{n,k}$ une mesure de la rotation de l'antenne.

La réalisation la plus simple du traitement d'autofocalisation consiste à compenser les écarts de l'antenne synthétique par rapport à Oy en appliquant aux signaux des capteurs des retards définis par la formule suivante, où c est la vitesse du son dans l'eau :

$$t_{n,k} = \frac{x_k + x_{n,k}}{C} \qquad (4)$$

On effectue ensuite la formation des voies comme pour une antenne qui aurait les mêmes $y_k$ et $y_{n,k}$, mais dont les $x_k$ et $x_{n,k}$ seraient tous nuls.

Lorsque les écarts suivant Ox le long de l'antenne sont trop élevés, cette correction simple ne peut plus être utilisée, les retards de focalisation dépendant alors de manière non séparable de la déformée qu'on estime et du point de focalisation.

Cette méthode est d'autant plus précise que l'on peut apparier un plus grand nombre de capteurs entre deux récurrences successives k et k+1 suivant la relation (1). On est limité en cela par la contrainte (2). Pour un nombre de capteurs suffisant, cette relation (2) signifie que le nombre de capteurs de la récurrence k utilisables pour estimer le déplacement transversal de l'antenne entre les récurrences k et k+1 est donné par :

$$I = N \times \frac{L - 2.\delta y}{L} \qquad (5)$$

On voit donc que pour qu'il y ait une proportion significative de capteurs utilisables, il faut que le déplacement interrécurrences soit nettement inférieur à L/2. Par ailleurs L/2 est la valeur maximale du déplacement interrécurrences au-delà de laquelle on a un sous-échantillonnage spatial de l'antenne synthétique qui dégrade ses performances ainsi que cela est expliqué dans l'article "Detection and Imaging Performance of a Synthetic Aperture Sonar", D. Billon, F. Le Clerc, L. Hué, OCEANS 93, [2]. En pratique cette limitation est contraignante : si L = 3 m et la portée $R_{max}$ du sonar vaut 500 m, la vitesse maximale est V = (L/2)/(2$R_{max}$/c) = 4,5 nds. On peut donc difficilement accepter que la limite de vitesse soit encore abaissée.

Pour permettre de mettre en oeuvre la méthode d'autofocalisation décrite précédemment sans abaisser la limite de vitesse, on propose de déplacer électroniquement le centre de phase de l'émission k+1, dans le sens opposé au déplacement physique de l'antenne, par rapport au centre de phase de l'émission k. La contrainte (2) devient alors :

$$y_{n,k} \geq y_{1,k} + 2.\delta y - e \qquad (6)$$

où e est le déplacement électronique vers l'arrière du centre de phase de l'émission de la récurrence k+1 par rapport à la récurrence k, c'est-à-dire $y_{k+1} = y_k + \delta y - e$ Pour $e = 2.\delta y$ la totalité des capteurs de l'antenne est utilisable pour l'autofocalisation, puisque la contrainte (6) qui s'écrit alors $y_{n,k} \geq y_{1,k}$ est satisfaite pour tout n.

Dans le cas général le nombre de capteurs utilisables pour l'autofocalisation est :

$$I \cong N \times \frac{L - |2.\delta y - e|}{L} \qquad (7)$$

Ce procédé de déplacement électronique de l'émission dans le sens opposé à l'avancement de la plate-forme en vue d'assurer une forte corrélation des signaux de deux récurrences successives est connu en radar, pour d'autres applications que l'autofocalisation d'antenne synthétique, où le type d'antenne correspondant est appelé DPCA (Displaced Phase Center Antenna).

L'invention telle que revendiquée consiste à appliquer un tel procédé pour faire l'autofocalisation des antennes synthétiques de sonar.

Selon un premier mode de réalisation on utilise deux fréquences différentes $f_1$ et $f_2$ pour effectuer l'autofocalisation, et une troisième fréquence différente $f_0$ pour former l'image.

Selon une autre caractéristique de ce premier mode de réalisation, les fréquences $f_1$ et $f_2$ sont émises en alternance aux extrémités de l'antenne, et la fréquence $f_0$ en un point fixe de celle-ci, par exemple le centre.

Selon un deuxième mode de réalisation on utilise deux fréquences différentes $f_1$ et $f_2$, on fait déplacer en sens opposés les centres de phase d'émission de ces fréquences sur K récurrences successives puis on inverses les sens de déplacement, on utilise la fréquence dont le centre de phase se déplace vers l'avant de l'antenne pour former une antenne synthétique sur ces K récurrences, et on utilise l'autre fréquence pour effectuer l'autofocalisation.

Selon une autre caractéristique de ce deuxième mode de réalisation, les valeurs K = 2 et K = 3 correspondent à deux cas préférés du deuxième mode de réalisation.

Selon un troisième mode de réalisation on utilise M fréquences distinctes $f_1$, ... $f_M$, dont les centres de phase d'émission sont réparties le long de l'antenne physique de réception avec un pas constant et sont déplacées selon une permutation circulaire à chaque nouvelle récurrence. Cette permutation circulaire déplace d'un pas vers l'avant les centres de phase de M-1 fréquences parmi les M fréquences, et de M-1 pas vers l'arrière le centre de phase de la fréquence restante qui est la seule utilisée pour appliquer le principe des centres de phase équivalents entre la nouvelle récurrence et la précédente afin d'estimer suivant le procédé général de l'invention le mouvement suivant Ox. Les M fréquences sont utilisées pour former l'image par synthèse d'ouverture.

D'autres particularités et avantages de l'invention apparaîtront clairement dans la description suivante, faite à titre d'exemple non limitatif en regard des figures annexées, qui représentent :

- la figure 1, un graphique explicatif du procédé connu de la référence [1] généralisé à un réseau linéaire de N capteurs,
- la figure 2, un graphique explicatif d'un premier mode de réalisation de l'invention,
- la figure 3, un graphique explicatif d'un premier exemple d'un deuxième mode de réalisation de l'invention,
- la figure 4, un graphique explicatif d'un deuxième exemple de ce deuxième mode de réalisation; et

- la figure 5, un graphique explicatif d'un troisième mode de réalisation de l'invention.

Dans un premier mode de réalisation, on utilise le procédé selon l'invention pour réaliser un sonar latéral fonctionnant à une vitesse relativement "grande".

Ce sonar fonctionne dans trois bandes de fréquence centrées sur $f_0$, $f_1$ et $f_2$. Le centre de phase de l'émission à $f_0$ est fixe, ce qui permet de former l'image sonar dans cette bande de fréquence.

Les fréquences $f_1$ et $f_2$ sont utilisées conformément au procédé décrit plus haut pour estimer la géométrie de l'antenne synthétique. Les centres de phase des émissions $f_1$ et $f_2$ sont sur un axe parallèle à l'antenne et distants de $2.\delta y$, ce qui peut être réalisé en utilisant certains des transducteurs de l'antenne de réception pour l'émission. De récurrence à récurrence on alterne l'affectation de $f_1$ et $f_2$ aux deux centres de phase. Pour un couple de récurrences successives donné, on utilise celle des deux fréquences $f_1$ et $f_2$ qui a été émise au point avant à la récurrence k et au point arrière à la récurrence k+1 pour obtenir l'autofocalisation (détermination des retards de correction des écarts par rapport à Oy ou de la géométrie de l'antenne dans Oxy comme expliqué précédemment). Pour le couple suivant, constitué des récurrences k+1 et k+2, on utilise l'autre fréquence émise à l'avant à la récurrence k+1 et au point reculé de $2.\delta y$ à la récurrence k+2, et ainsi de suite.

Dans le cas plus général, il est possible de choisir l'emplacement du centre de phase reculé à un pas de transducteur près par commutation spatiale des circuits d'émission sur un réseau de transducteurs qui peut être le même que celui de réception, afin que e soit aussi proche que possible de $2.\delta y$ pour $\delta y \leq L/2$. En pratique on cherchera à avoir la vitesse la plus grande possible, donc $\delta y$ proche de $L/2$. Ce cas correspond à une réalisation particulière dans laquelle les émetteurs fonctionnant aux fréquences $f_1$ et $f_2$ et servant à l'autofocalisation sont situés aux deux extrémités de l'antenne. La position de l'émetteur fonctionnant à la fréquence $f_0$ et servant à l'imagerie est indifférente pourvu qu'elle soit fixe. Dans une réalisation particulière, c'est le centre de l'antenne et les deux émetteurs extrêmes fonctionnent alternativement à $f_1$ et $f_2$. Cette configuration dans laquelle l'émission s'effectue sur deux fréquences en alternance aux deux extrémités de l'antenne est décrite dans le brevet US n° 5,295,118 déposé le 18.02.93 et publié le 15.03.94. Toutefois dans ce brevet, ce dispositif d'émission a pour objet un doublement de la vitesse de la plate-forme et les signaux reçus ne sont pas exploités pour faire de l'autofocalisation comme il est proposé dans la présente invention, ce qui ne serait pas possible car dans ce cas on a L = e = $\delta y$ et la relation (7) montre que le nombre de capteurs utilisables pour autofocaliser l'antenne est nul. En outre les dispositifs d'émission sont différents puisque dans un premier mode de réalisation l'invention utilise trois fréquences, une fréquence d'imagerie sonar et deux fréquences auxiliaires d'autofocalisation, comme représenté dans la figure 2 et, dans un deuxième mode de réalisation, l'invention utilise deux fréquences dont les centres de phase d'émission ne sont pas nécessairement aux deux extrémités de l'antenne et peuvent être situés en plus de 2 points au cours des récurrences.

Dans un exemple concret de ce premier mode de réalisation, on a utilisé les paramètres suivants :

- portée, récurrence : $R_{max}$ = 500 m, Tr = 670 ms
- longueur antenne, vitesse : L = 4 m, $V_{max}$ = 6 noeuds
- fréquences : $f_0$ = 100 kHz, $f_1$ = 90 kHz, $f_2$ = 80 kHz
- largeur de bande : $B_0$ = 20 kHz, $B_1$ = 10 kHz, $B_2$ = 10 kHz
- durée d'impulsion : $T_0 = T_1 = T_2$ = 5 ms (sous forme de "chirp")
- nombre de capteurs : N = 80, K = 30 à la portée maximale de 500 m
- longueur des pupilles d'émission : $l_0$ = 0,1 m, $l_1 = 1_2$ = 0,4 m
- ouverture des diagrammes d'émission : $2\theta$-3,0 = 8°, $2\theta$ -3,1 ≈ $2\theta$-3,2 ≈ 2°
        (l'indice n de $\theta$-3,n indique la fréquence fn correspondante).
- résolution suivant Ox : $c/2B_0$ = 4 cm, suivant Oy : $l_0/2$ = 5 cm.

On utilise des faisceaux d'autofocalisation plus fins que ceux utilisés pour l'imagerie parce que la méthode d'autofocalisation marche d'autant mieux que les faisceaux sont fins, alors que la résolution de l'antenne synthétique est inversement proportionnelle à la largeur du faisceau d'émission. Les trois faisceaux d'émission sont stabilisés en azimut dans une direction Ox perpendiculaire à la position moyenne de l'antenne au moyen d'une centrale d'attitude dont la sortie est fusionnée avec l'estimation de la rotation de l'antenne dans le plan Oxy fournie par l'autofocalisation. Le pointage électronique est réalisé en utilisant les deux transducteurs centraux à $f_0$ et les 8 transducteurs de chaque extrémité à $f_1$ et à $f_2$. Le suréchantillonnage spatial de l'antenne réelle facilite l'interpolation spatiale requise par la méthode d'autofocalisation.

Dans un deuxième mode de réalisation, on utilise le procédé selon l'invention pour réaliser un sonar de coque destiné à fonctionner à vitesse "lente" pour effectuer une chasse aux mines.

De manière connue, pour classifier un objet détecté au moyen de son sonar détecteur, le bâtiment chasseur de mines s'approche de l'objet suspect détecté à une distance de sécurité de l'ordre de 150 mètres et utilise son sonar classificateur sur ombre en vue d'obtenir une image classifiante de l'objet. Pour cela il tourne autour de l'objet en maintenant sa distance de sécurité et il analyse la déformation de l'ombre acoustique portée sur le fond dans ce mouvement pour obtenir la forme de l'objet. La qualité de l'image de l'ombre est limitée principalement par la résolution en azimuth du sonar, qui est de l'ordre de 0,1 à 0,2°, ce qui est du même ordre de grandeur que la taille des objets à classifier. L'invention propose donc de mettre en oeuvre un traitement d'antenne synthétique en vue d'améliorer cette résolution lors du mouvement circulaire du bateau autour de l'objet, ce qui présente un grand intérêt opérationnel. Ce mouvement peut s'effectuer à faible vitesse, de l'ordre de 2 noeuds suivant un axe parallèle à l'antenne. Pour une durée de récurrence de 250 ms, correspondant à une portée maximale de 180 m, le déplacement est de 25 cm, ce qui laisse sur une antenne de 1,5 m une étendue de 1 m (= 1,5 m - 2 x 0,25 m) pour faire une autofocalisation avec une émission dont le centre de phase sur l'antenne est fixe. On peut alors utiliser la même fréquence pour former l'image et pour effectuer l'autofocalisation.

La résolution angulaire de l'antenne synthétique en une zone du fond insonifiée lors des K récurrences successives est

$$2\theta_{3's} \cong \frac{\lambda}{L + 2(K - 1).\delta y} \qquad (8)$$

à comparer avec la résolution de l'antenne réelle :

$$2\theta_{3,r} \cong \frac{\lambda}{L}. \qquad (9)$$

Dans l'exemple ci-dessus (L = 1,5 m, $\delta y$ = 0,25 m) il faut donc K = 4 pour diviser par deux la résolution angulaire et K = 7 pour la diviser par trois. Bien que ces nombres soient faibles par rapport à l'exemple du premier mode de réalisation (K = 30), ils sont ici difficiles à utiliser car, alors que le premier mode de réalisation s'applique principalement aux sonars latéraux montés sur des véhicules remorqués naviguant à proximité du fond, le deuxième mode décrit ci-après concerne essentiellement les sonars de coque dont l'antenne est à quelques mètres seulement sous la surface où la cohérence spatio-temporelle du milieu est nettement plus faible que près du fond. Par conséquent il est important de minimiser pour un objectif donné de résolution de l'antenne synthétique le déplacement physique de l'antenne réelle et le temps de formation de l'antenne synthétique, ce qui revient à minimiser K. Un autre avantage de minimiser K est de simplifier les traitements d'autofocalisation et de formation de l'antenne synthétique. C'est l'objet de ce deuxième mode de réalisation de l'invention.

Dans ce mode on a seulement deux fréquences $f_1$ et $f_2$. Pendant les K récurrences successives qui servent à former l'antenne synthétique, le centre de phase d'émission, par exemple $f_1$, est déplacé le long de l'antenne dans la direction du mouvement de l'antenne à chaque nouvelle récurrence, alors que le centre de phase d'émission de l'autre fréquence, par exemple $f_2$, est déplacé en sens opposé. On utilise la fréquence $f_1$

pour former l'antenne synthétique et la fréquence $f_2$ pour l'autofocaliser suivant le principe exposé précédemment. Lors des K-1 récurrences suivantes on inverse le sens des déplacements des centres de phase d'émission de $f_1$ et $f_2$ et on forme une antenne synthétique à la fréquence $f_2$ avec la dernière des K récurrences précédentes et ces K-1 nouvelles récurrences. Et ainsi de suite. Si $T_r$ est la durée de la récurrence du sonar, la période des images formées de cette façon est $(K-1).T_r$.

Si E est l'excursion totale pendant les K récurrences du centre de phase de l'émission à la fréquence servant à former l'antenne synthétique, la résolution angulaire obtenue est

$$2\theta_{3,s} \cong \frac{\lambda}{L + E + 2(K-1).\delta y} \qquad (10)$$

Soient $e_+$ et $e_-$ les déplacements entre deux récurrences respectivement du centre de phase de l'émission à la fréquence de formation de l'antenne synthétique et du centre de phase de l'émission à la fréquence d'autofocalisation de l'antenne synthétique. Il faut que la contrainte suivante soit respectée :

$$e_+ + 2\ \delta y \le L \qquad (11)$$

Cette expression représente la condition d'échantillonnage spatial correct de l'antenne synthétique. Le nombre I de capteurs auxquels on peut appliquer le principe d'équivalence des centres de phase, à la fréquence dont le centre de phase d'émission recule, est donné par l'expression (7) où e = e-.

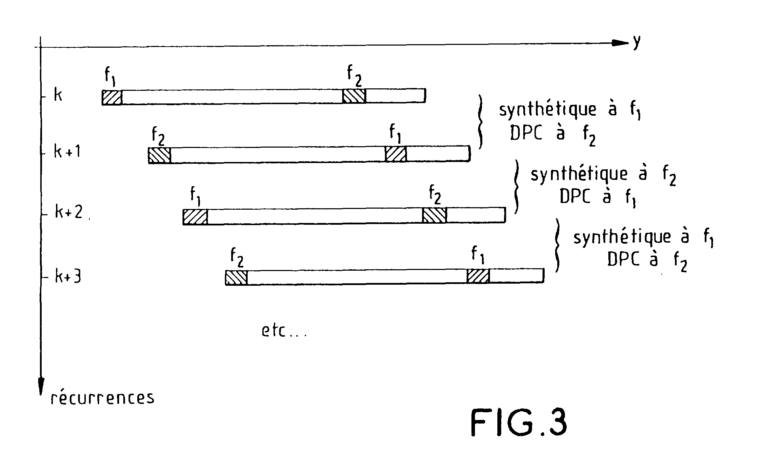

Dans un premier exemple concret de ce deuxième mode de réalisation, représenté sur la figure 3, les paramètres sont les suivants :

L = 1,5 m, N = 100, $f_1$ = 410 kHz, $f_2$ = 430 kHz
$B_1 = B_2$ = 15 kHz, $T_1 = T_2$ = 7 ms
Longueur des 2 pupilles d'émission = 10,5 cm
Largeur du champ à 150 m et -3 dB d'atténuation du niveau sonore = 4,5 m
K = 2, E = $e_+$ = $e_-$ ≤ 1,4 m
Récurrence image = récurrence sonar = 250 ms
Résolution à 150 m et à la vitesse de 2 noeuds = 0,05 m x 0,18 m.

Les deux transducteurs sont composés de 7 éléments qui sont des éléments du réseau de réception. L'espacement E des deux centres de phase est asservi à la vitesse V transversale par rapport à l'axe de visée suivant la relation :

$$E = 2V.T_r \qquad (12)$$

où $T_r$ = 250 ms. Cet espacement variable est réalisé par commutation électronique des éléments des transducteurs parmi les 100 éléments du réseau de réception.

Les deux faisceaux sont pointés sur le centre de l'objet à classifier au départ par une désignation de l'opérateur et ensuite par asservissement en fonction des mesures de cap et de vitesse du bateau.

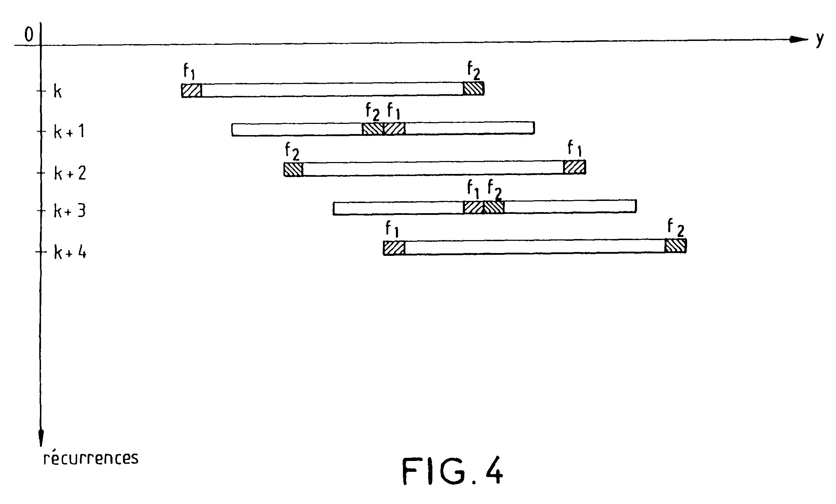

Dans un deuxième exemple concret, représenté sur la figure 4, les paramètres sont les mêmes, sauf pour :

K = 3, E = 1,4 m, $e_+ = e_- = 0{,}75$ m ou 0,65 m
Récurrence image = 2 x récurrences sonar = 500 ms
Résolution à 150 m et à la vitesse V = 2 noeuds = 0,05 m x 0,14 m.

Comme représenté sur la figure 4, il y a quatre centres de phase d'émission à ± 5 cm et ± 0,7 m du centre.

L'invention propose également un troisième mode de réalisation, plus complexe et qui s'applique essentiellement aux sonars latéraux à grande vitesse, comme dans le premier mode par rapport auquel il a l'avantage de rendre disponible pour l'imagerie par synthèse d'ouvertures toutes les fréquences émises. L'impulsion sonar désirée est divisée spectralement en M impulsions de fréquences centrales $f_1$, $f_2$, ..., $f_M$ et de même largeur de bande égale à la largeur de bande de l'impulsion désirée divisée par M. Les centres de phases d'émission sont distribués le long de l'antenne physique de réception avec un pas p constant et leur attribution aux M fréquences est modifiée à chaque nouvelle récurrence suivant une permutation circulaire telle que toutes les fréquences ont leurs centres de phase avancés d'un pas, sauf une dont le centre de phase est reculé de M-1 pas par rapport aux sens d'avancement du porteur. Le pas p doit satisfaire la relation (11) avec e+ = p. Le nombre I de capteurs auxquels on applique le principe d'équivalence des centres de phase, à la fréquence dont le centre de phase d'émission est reculé par rapport à la récurrence précédente pour estimer le mouvement suivant Ox selon le procédé de l'invention, est donné par l'expression (7) où e = (M-1)p. Un cas d'intérêt particulier est celui où M et p sont choisis de façon à ce que tous les capteurs puissent être utilisés pour faire l'autofocalisation.

On a alors :

$$(M - 1)p = 2.\delta y \qquad (13)$$

et, compte tenu de (11) où on fait $e_+ = p$, on doit avoir

$$M \geq \frac{2.\delta y}{L - 2.\delta y} + 1. \qquad (14)$$

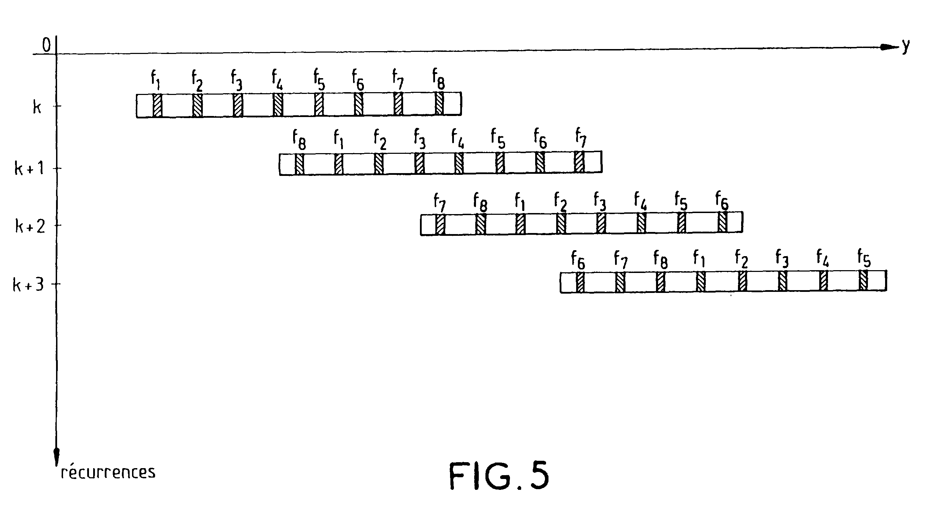

Ce troisième mode de réalisation correspond à l'exemple représenté en figure 5, où les paramètres sont :

$R_{max}$ = 500 m, L = 4 m
$T_r$ = 700 ms, $V_{max}$ = 5 noeuds ($\Rightarrow \delta y$ = 3,5 m)
M = 8, p = 0,5 m
$f_1$ = 91,25 kHz, $f_m$+1 = $f_m$ + 2,5 kHz
$B_1 = B_2 = ... = B_8$ = 2,5 kHz
$T_1 = T_2 = ... = T_8$ = 30 ms
N = 80, K = 30 à 500 m
$I_1 = I_2 = ... I_8$ = 0,1 m
2θ-3,1 = 2θ-3,2, = ... 2θ-3,8 = 8°
Résolution suivant Ox : c/2B = 4 cm
Résolution suivant Oy : $I_m$/2 = 5 cm.

## Revendications

1. Procédé d'autofocalisation pour sonar à antenne synthétique, caractérisé en ce que l'on utilise au moins deux fréquences ayant des centres de phase différents et dont les positions varient le long de l'antenne physique de réception d'une récurrence à la suivante.

2. Procédé selon la revendication 1, caractérisé en ce que l'on utilise deux fréquences différentes $f_1$ et $f_2$ pour effectuer l'autofocalisation, et une troisième fréquence différente $f_0$ pour former l'image par synthèse d'ouverture.

3. Procédé selon la revendication 2, caractérisé en ce que les fréquences $f_1$ et $f_2$ sont émises en alternance aux extrémités de l'antenne, et la fréquence $f_0$ en un point fixe de celle-ci.

4. Procédé selon la revendication 1, caractérisé en ce que l'on utilise deux fréquences différentes $f_1$ et $f_2$, que l'on fait déplacer en sens opposés les centres de phase d'émission de ces fréquences sur K récurrences successives puis que l'on inverse les sens de déplacement, que l'on utilise la fréquence dont le centre de phase se déplace vers l'avant de l'antenne pour former une antenne synthétique sur ces K récurrences, et que l'on utilise l'autre fréquence pour effectuer l'autofocalisation.

5. Procédé selon la revendication 4, caractérisé en ce que K = 2.

6. Procédé selon la revendication 4, caractérisé en ce que K = 3.

7. Procédé selon la revendication 1, caractérisé en ce que l'on utilise M fréquences, M ≥ 3, que leurs M centres de phase d'émission sont répartis à pas constant le long de l'antenne de réception, que la correspondance biunivoque entre les M centres de phase et les M fréquences est modifiée à chaque nouvelle récurrence selon une permutation circulaire, les centres de phase de M-1 fréquences étant avancés d'un pas et celui de la fréquence restante étant reculé de M-1 pas, et que chacune des M fréquences sert à l'autofocalisation et à la synthèse d'ouverture.

**Patentansprüche**

1. Autofokussierungsverfahren für ein Sonar mit synthetischer Antenne, dadurch gekennzeichnet, daß wenigstens zwei Frequenzen verwendet werden, die unterschiedliche Phasenzentren besitzen, deren Positionen sich längs der physikalischen Empfangsantenne von einem Durchlauf zum nächsten ändern.

2. Verfahren nach Anspruch 1, dadurch gekennzeichnet, daß zwei unterschiedliche Frequenzen $f_1$ und $f_2$ verwendet werden, um die Autofokussierung auszuführen, und eine dritte unterschiedliche Frequenz $f_0$ verwendet wird, um das Bild durch Öffnungswinkelsynthese zu bilden.

3. Verfahren nach Anspruch 2, dadurch gekennzeichnet, daß die Frequenzen $f_1$ und $f_2$ abwechselnd an den Enden der Antenne ausgesendet werden und daß die Frequenz $f_0$ an einem festen Punkt derselben ausgesendet wird.

4. Verfahren nach Anspruch 1, dadurch gekennzeichnet, daß zwei verschiedene Frequenzen $f_1$ und $f_2$ verwendet werden, daß die Sende-Phasenzentren dieser Frequenzen in K sukzessiven Durchläufen in entgegengesetzten Richtungen verschoben werden, daß dann die Verschiebungsrichtung umgekehrt wird, daß die Frequenz, deren Phasenzentrum in Vorwärtsrichtung der Antenne verschoben ist, verwendet wird, um eine synthetische Antenne für diese K Durchläufe zu bilden, und daß die andere Frequenz verwendet wird, um die Autofokussierung auszuführen.

5. Verfahren nach Anspruch 4, dadurch gekennzeichnet, daß K = 2.

6. Verfahren nach Anspruch 4, dadurch gekennzeichnet, daß K = 3.

7. Verfahren nach Anspruch 1, dadurch gekennzeichnet, daß M Frequenzen, M ≥ 3, verwendet werden, daß deren M Sende-Phasenzentren mit konstanter Schrittweite längs der Empfangsantenne verteilt sind, daß die eineindeutige Entsprechung zwischen den M Phasenzentren und den M Frequenzen bei jedem neuen Durchlauf gemäß einer zyklischen Permutation modifiziert wird, wobei die Phasenzentren von M - 1 Frequenzen um einen Schritt voreilen und jenes der verbleibenden Frequenz um M - 1 Schritte nacheilt, und daß jede der M Frequenzen der Autofokussierung und der Öffnungswinkelsynthese dient.

**Claims**

1. Self-focusing method for a synthetic antenna sonar, characterised by the use of not less than two frequencies having different phase centres and the positions of which vary along the physical receiving antenna from one recurrence to the next.

2. Method according to claim 1, characterised by the use of two different frequencies $f_1$ and $f_2$ to carry out the self-focusing, and of a different third frequency $f_0$ to form the image by aperture synthesis.

3. Method according to claim 2, characterised in that frequencies $f_1$ and $f_2$ are emitted alternately at the ends of the antenna, and frequency $f_0$ at a fixed point thereof.

4. Method according to claim 1, characterised in that two different frequencies $f_1$ and $f_2$ are used, that the emission phase centres of these frequencies are shifted in opposite directions over K successive recurrences and that the shift directions are reversed, that the frequency whose phase centre is being shifted towards the front of the antenna is used to form a synthetic antenna over said K recurrences, and that the other frequency is used to carry out the self-focusing.

5. Method according to claim 4, characterised in that K = 2.

6. Method according to claim 4, characterised in that K = 3.

7. Method according to claim 1, characterised in that M frequencies are used, where M ≥ 3, that their M emission phase centres are distributed with constant spacing along the receiving antenna, that the biunique correspondence between the M phase centres and the M frequencies is modified with each new recurrence in accordance with a circular permutation, the phase centres of M-1 frequencies being advanced by one space and that of the remaining frequency being moved back by M-1 spaces, and that each of the M frequencies is used for self-focusing and for aperture synthesis.

FIG.1

FIG.2

FIG.3

FIG. 4

FIG.5